# EUROPEAN PATENT SPECIFICATION

(11) **EP 4 267 271 B1**
(45) Date of publication and mention of the grant of the patent: **11.02.2026**
(21) Application number: 21839581.2
(22) Date of filing: 21.12.2021
(51) Int. Cl.: B01D 15/16, G01N 30/32, G01N 30/34, G01N 30/02, G01N 30/88

(54) **SEPARATION OF VOLATILE COMPONENTS**
TRENNUNG VON FLÜCHTIGEN KOMPONENTEN
SÉPARATION DE COMPOSANTS VOLATILES

(30) Priority: 22.12.2020 EP 20383135
(43) Date of publication of application: 01.11.2023
(73) Proprietor: Gases Research Innovation and Technology, S.L., 08279 Avinyó (ES)
(72) Inventor: FERRER ENRÍQUEZ, Nabí, 08870 SITGES (ES)
(74) Representative: ZBM Patents - Zea, Barlocci & Markvardsen
(86) International application number: PCT/EP2021/087043
(87) International publication number: WO 2022/136401

(56) References cited:
- WO-A2-2016/027097
- CN-U- 207 114 491
- US-A1- 2006 249 458
- US-A1- 2018 345 175

## Description

This application claims the benefit of European Patent Application EP20383135.9, filed December 22, 2020.

### Technical Field

The present invention relates to the field of chromatographic-based separation processes. In particular, the present invention relates to a process for the separation of one or more volatile components from a liquefied gas mixture based on the use of a preparative HPLC equipment.

### Background Art

The inert nature of many haloalkanes, chlorofluorocarbons (CFC) and hydrochlorofluorocarbons (HCFC), particularly CFC-11 and CFC-12, made them preferred choices among refrigerants for many years because of their non-flammability and non-toxicity. However, their stability in the atmosphere and their corresponding global warming potential and ozone depletion potential raised concerns about their usage. This led to their replacement with hydrofluorocarbons (HFCs) and perfluorocarbons (PFCs), especially HFC-134a, which are not-ozone depleting, and have lesser global warming potentials. However, these refrigerants still have global warming potentials thousands of times greater than CO₂.

R-134a (tetrafluoroethane) which has been widely used in residential heat pump, air conditioning and refrigeration systems since 1990 is being removed rapidly in developed countries due to its GWP. R-410A, a refrigerant obtained by mixing R-32 (difluoromethane) and R-125 (pentafluoroethane), is commonly used in new residential air conditioning systems but has a high global warming potential (GWP). Therefore, many air conditioning and refrigeration manufacturers are exchanging R-410A for R-32, driven by various factors including low global warming potential (GWP), zero ozone layer depletion and better energy efficiency, etc.

Azeotropic gases (those named as 500 series, for example, R-507A) are extremely useful in refrigeration systems because they avoid disproportion of the mixture if a leakage occurs. However, there are not too many options on the market that have a low level of GWP.

Most developed countries are planning a gradual elimination of HFCs because of their very high global warming potential. The operation and maintenance of existing equipment may create a high demand for HFCs in the future. Therefore, recycling and reusing used HFCs and HCFCs can not only help reduce emissions into the environment, but also meet future demand.

A vast variety of techniques are currently studied to perform this type of separations, i.e., membrane separation, cryogenic distillation, or ionic liquids. But neither of them is viable nor economic to be performed in an industrial scale.

Gases chromatography technique manage to separate completely these compounds. However, it would not be possible to use this technique in a large scale. On the other hand, in gases chromatography it is normal that in the detector the product to be detected is destroyed.

The most widely used method for the recovery of fluorinated compounds used on a large scale is cryogenic separation i.e., liquefaction followed by distillation. However, in many cases, the purity of the separated fluorinated compounds after distillation cannot immediately meet industry application standards. In addition, the material used as a raw material, which this whole process revolves around it, must have particular and very specific technical characteristics in order to be able to result in a material whose use is efficient, both from an environmental, economic (quantity of material used) but also from an energy efficiency point of view, which finally ends up having an impact on an environmental and equally economic issue.

Keeping all these problems associated with current **HFC** recovery methods in mind, there is an urgent need to explore industrially applicable alternatives.

US 2018/345175 A1 discloses a liquid chromatography system and method utilizing a mobile phase comprising liquefied compressible gas and miscible organic solvents. The compressible fluid may be carbon dioxide (CO₂). Liquid CO₂ tapped from an existing source is depressurized through a flow control metering station before adding solvent. The mobile phase flows through a sample vessel containing analytes and chromatography column for sample separation. A back pressure regulator maintains a set elution pressure in the chromatography column. CO₂ remains in liquid phase for elution in the column.

### Summary of Invention

The present inventors have developed an efficient process for the separation of volatile compounds based on high performance liquid chromatography (hereinafter referred as "HPLC"). The process is based at least in part on (a) ensuring during the whole process a pressure which maintains both the sample and component eluting from the column in liquid form at room temperature; and (b) the different polarity of the stationary and mobile phases of the HPLC column.

As it is shown below, the present inventors were able to efficiently separate a component, R-125, from an azeotropic blend, R-507A. R-507A is a mixture which consists of R-125 (Pentafluoroethane) and R-143a (trifluoroethane) at 50% in mass. The R-507A mix has a global warming potential of 3985, mainly due to the presence of R 143a. On the other hand, R-125 is a product with a lower GWP (about 3500 according to AR4) that can serve as a raw material for many other mixtures. Therefore, the aim of the present inventors was to efficiently recover R-125. Thus, R-507A was injected to a preparative HPLC equipment wherein the pressure was regulated to be of about 1.5 MPa (15 bars), that is over the vapor pressure of R-507A (1.3 MPa) as well as of each one of any of the components forming the mixture, in order to guarantee the liquid form of the sample and separated component(s), at room temperature, during the whole process of separation. On the other hand, due to the nature of the components to be separated, which differed in the number of fluorine atoms and, therefore, in their polar nature, it was selected an apolar stationary phase (silica C-18 column), and a polar mobile phase which was a mixture of water and 1-propanol. Under these particular conditions of pressure and polarity, R-125 could be successfully separated with an appropriate degree of purity from the mixture.

The fact that the process of the invention allows the successful separation of volatile components from an azeotropic liquefied gas mixture such as R-507A demonstrates how efficient it is because, as the skilled person recognizes, the separation of components from an azeotropic mixture is something very difficult.

Therefore, the process of the invention ensures the recovery of fluorinated gases of high quality, with the technical characteristics necessary to be used as a final product, thus, avoiding its destruction.

It is the first time that it is reported the usability of a preparative HPLC for separating volatile compounds from a liquefied mixture. The fact that the process of the invention works with a preparative HPLC make it industrially scale applicable.

Altogether, the invention provides an industrial effective process for recovery fluorinated compounds used on a large scale for its subsequent recycling, thus minimizing the emission of this type of gas into the environment and avoiding its production.

Thus, the present invention provides a process for separating a component of interest from a gas mixture liquefied sample, the process comprising the steps of (a) subjecting the sample to a preparative reverse-phase high performance liquid chromatography (RP-HPLC); and (b) collecting at least a portion of the component of interest; wherein:
(i) the process is performed at a temperature from 10 to 60°C, and
(ii) the gas mixture liquefied sample applied on the HPLC column as well as the components eluting through the HPLC are maintained in liquid form, by applying a pressure equal to or higher than a vapor pressure value P at least during the step (a);
wherein the vapor pressure value "P" is determined by determining the vapor pressure of each one of the components forming the sample as well as of the gas mixture liquefied sample under the same temperature at which the separation step is performed, and selecting the highest value among these vapor pressure values.

The liquefied gas mixture sample must be retained in liquid form during, at least, the whole separation step. The same occurs with the components which are eluting from the column: they need to be in liquid form at least during their elution through the HPLC. If not, HPLC could not be successfully performed.

In order to retain the liquid state both of the sample as well as of the components eluting from the column, a pressure "P" as defined in the context of the invention needs to be applied during the process. If the process was performed at a pressure lower than "P", the mixture sample, once applied on the HPLC column, would become gas and no separation would be possible.

Maintaining the pressure, until the collection of the component of interest, at a pressure equal to or higher than the vapor pressure P avoids the evaporation of the components forming the mixture, something already reported in the prior art as a drawback when other separation techniques were used. The uncontrolled evaporation of the components has a negative impact on separation's repeatability as well as on the generation of background noise in the detector, all affecting to the appropriate management of the separation.

The inventors surprisingly found that the HPLC system perfectly worked, and that the high pressures applied to guarantee the liquid state of the sample as well as of the components forming the sample, did not have any negative impact on the efficiency of the HPLC column.

The process of the invention is robust and controllable, allowing obtaining a product that meets the desired technical specifications and drastically reducing HFC emissions, giving added value to a waste and thus contributing to a reduction of environmental impact.

As it is also shown below, the inventors of the present invention have designed a preparative HPLC equipment which includes, downstream to the preparative HPLC column, a back-pressure valve, which guarantees the maintenance of the appropriate pressure within the whole equipment to maintain the sample (once applied to the HPLC column) and components (as they separate) in liquid form at room temperature until their collection. The appropriate value of pressure within the system will depend on the particular volatile component to be separated from the mixture. In the example provided below, for R-507A, the vapor pressure value "P" was determined to be 1.4 MPa, corresponding to R-143a. R-125 and R-507A had vapor pressure values of 1.2 and 1.3, respectively (i.e., lower than the value for R-143a). And the pressure applied in the process of the invention, for this embodiment, was of about 1.5 MPa (15 bars) at about 25°C (i.e., higher than the vapor pressure value P of 1.4 MPa).

Thus, although not part of the claimed subject-matter, the disclosure provides a HPLC equipment comprising a preparative HPLC column 1 and a back-pressure valve (V3), which is connected downstream the HPLC column 1.

The inclusion of valve V3 guarantees the liquid form of both the sample and component separated from the mixture until its collection, overcoming in this way drawbacks already reported in HPLC systems due to the evaporation of the analyte, such as negative separation's repeatability or the background noise raised in the detector.

### Brief Description of Drawings

Fig 1. is a diagram of one example of the present preparative HPLC equipment.
Fig 2 is a detail view of one example of an injector valve.

### Detailed description of the invention

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the present invention, any ranges given include both the lower and the upper end-points of the range.

The disclosure provides an HPLC equipment comprising a preparative HPLC column 1 and a back-pressure valve (V3) which is connected downstream the HPLC column 1. In one embodiment, the HPLC column is a RP-HPLC. In an alternative embodiment, the HPLC column is a NP-HPLC.

In one embodiment, the HPLC equipment further comprises an injector valve 9 with a sample loop, located upstream the preparative HPLC column 1 and/or one of a detector 3, such as an UV-visible absorbance detector, which is located between the HPLC column 1 and the back-pressure valve (V3).

The equipment can further include a valve V2 to control the fill of the loop with the sample. In another embodiment, the HPLC system includes a further valve V1 regulating the entry of the sample in the injector valve 9, in addition to a V2.

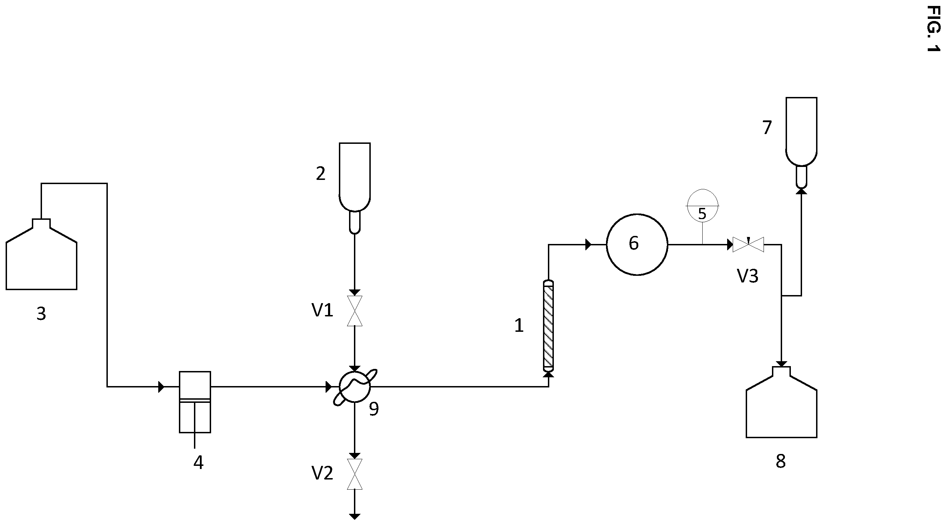

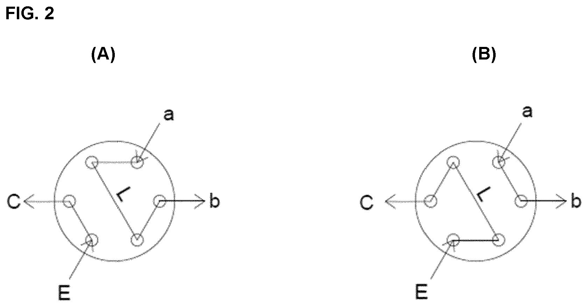

In one embodiment, the HPLC system is one as the one provided in Fig. 1. In this embodiment, the HPLC equipment comprises a RP-HPLC column 1, in the example below an Agilent Prep-C18 30 x 150mm, 10µm HPLC column. The HPLC equipment further comprises a sample vessel 2 fluidly connected to the HPLC column 1 via a first valve V1. An eluent vessel 3 is also fluidly connected to the HPLC column 1 through a piston isocratic pump 4. A second valve V2 and a third valve V3 are also provided. The second valve V2, together with the first valve V1 allow the injection loop to be filled with the gas mixture liquified sample and optimize the efficiency because it is finely regulated the load of sample within the loop/equipment. The third valve V3 adjusts system pressure within the system so as to ensure at every time that it is always equal to or higher than the vapor pressure value P. A pressure indicator 5 is provided just upstream the third valve V3. A detector 6 such as a UV-VIS spectrometer is also provided. The HPLC equipment 1 also comprises a vessel 7 suitable for collecting the component of interest. The eluant is collected in a vessel 8. The eluant corresponds to the mobile phase collected from the HPLC column and which has a different composition from the eluent. An injection valve 9 having a loop is also provided upstream to the HPLC column 1. The size of the injection valve loop determines the volume of the liquefied sample to be separated. In the case of the Example provided below, the injection valve loop had a size equivalent to 1 mL of sample. The injector valve 9 can be arranged in a loop charge mode and in sample injection mode as shown in Fig. 2. Fig. 2 represents an injector valve with a sample loop (L). When the valve is in the loop charge mode shown in Fig. 2a, the sample from the sample vessel 2 enters the loop through port (a) and comes out through port (b). The sample is then allowed to flow within the loop for a period of time suitable for ensuring air and undesirable traces within the loop are purged and the loop is completely filled with the sample. Once the loop is effectively filled with the sample to be separated, the injection valve 9 is arranged in the sample injection mode shown in Fig. 2B. In this mode, the eluent is pumped from the eluent vessel 3 through the isocratic pump 4 to the injection valve 9 and enters the loop (E), pulling out the previously charged sample into the HPLC column 1 (C).

The present invention provides a process for separating a component of interest from a gas mixture liquefied sample, the process comprising the steps of (a) subjecting the sample to a preparative reverse-phase high performance liquid chromatography (RP-HPLC); and (b) collecting at least a portion of the component of interest; wherein(i) the process is performed at a temperature from 10 to 60°C, and
(ii) the gas mixture liquefied sample applied on the HPLC column as well as the components eluting through the HPLC are maintained in liquid form, by applying a pressure equal to or higher than a vapor pressure value P at least during the step (a);
wherein the vapor pressure value "P" is determined by determining the vapor pressure of each one of the components forming the sample as well as of the gas mixture liquefied sample under the same temperature at which the separation step is performed, and selecting the highest value among these vapor pressure values.

The terms "gas mixture liquefied sample" and "gas mixture sample" points out the physical state of the sample at the temperature conditions at which the separation is performed. As it has been stated above, the HPLC separation is performed at room temperature.

Therefore, in the context of the invention, the term "gas mixture liquefied sample" refers to a gas mixture sample which originally was in gas state at room temperature but that it has been liquefied to become in liquid state at the same temperature conditions.In the present invention, a "gas mixture liquefied sample" means a gas mixture that has been turned into a liquid at room temperature by cooling or compressing it using any of the well-known routine techniques available in the state of the art.

**Alternatively,** in the context of the invention, the term "gas mixture sample" refers to the sample which is in gas state at room temperature conditions (i.e., the sample has not been subjected to cooling or compression under pressure). A gas mixture sample can not be applied on a HPLC, neither the separation be performed. Therefore, the gas mixture sample has to be always previously liquified to make possible its application on the HPLC separation, and the liquid form has to be retained whereas the separation occurs.

When used herein the term "preparative" in connection with HPLC chromatography, means separation by chromatography of sufficient quantities of a substance, i.e., the volatile compound, to be further used in the purified form. Preparative chromatography is thus opposed to analytical chromatography which is used for analysis purposes only. It is well-established that a preparative chromatography can be defined based on the injection volume. And that the frontier volume between preparative and analytical techniques is around 0.1 mL. Therefore, a preparative HPLC column, in the context of the present invention, can be understood as any HPLC column onto a load higher than 0.1 mL can be applied.

In the present invention, "normal phase HPLC", also referred as "NP-HPLC", separates analytes based on their affinity for a polar stationary surface such as silica. Hence it is based on analyte ability to engage in polar interactions (such as hydrogen-bonding or dipole-dipole type of interactions) with the sorbent surface. NP-HPLC uses a non-polar, non-aqueous mobile phase, and works effectively for separating analytes readily soluble in non-polar solvents. The analyte associates with and is retained by the polar stationary phase. Adsorption strengths increase with increased analyte polarity. The use of more polar solvents in the mobile phase will increase the retention time of analytes, whereas more hydrophobic solvents tend to induce faster elution (decreased retention times).

In the present invention, "reverse phase HPLC", also referred as "RP-HPLC", has a non-polar stationary phase and an aqueous, moderately polar mobile phase. One common stationary phase is a silica which has been surface-modified with RMe₂SiCl, where R is a straight chain alkyl group such as C₁₈H₃₇ or C₈H₁₇. With such stationary phases, retention time is longer for molecules which are less polar, while polar molecules elute more readily (early in the analysis). The binding of the analyte to the stationary phase is proportional to the contact surface area around the non-polar segment of the analyte molecule upon association with the ligand on the stationary phase. Reversed-phase chromatography employs a polar (aqueous) mobile phase. As a result, hydrophobic molecules in the polar mobile phase tend to adsorb to the hydrophobic stationary phase, and hydrophilic molecules in the mobile phase will pass through the column and are eluted first. Hydrophobic molecules can be eluted from the column by decreasing the polarity of the mobile phase using an organic (non-polar) solvent, which reduces hydrophobic interactions. As the skilled in the art knows, the retention time can be increased by adding more water to the mobile phase; thereby making the affinity of the hydrophobic analyte for the hydrophobic stationary phase stronger relative to the now more hydrophilic mobile phase. Similarly, the skilled person also knows that the retention time can be decreased by adding more organic solvent to the eluent.

In the present invention the term "vapor pressure" also known as "equilibrium vapor pressure" is defined as the pressure exerted by a vapor in thermodynamic equilibrium with its condensed phases (solid or liquid) at room temperature in a closed system. Vapor pressure is measured in the standard units of pressure. The International System of Units (SI) recognizes pressure as a derived unit with the dimension of force per area and designates the pascal (Pa) as its standard unit. Experimental measurement of vapor pressure is a simple procedure. Procedures often consist of purifying the test substance, isolating it in a container, evacuating any foreign gas, then measuring the equilibrium pressure of the gaseous phase of the substance in the container at room temperature. Better accuracy is achieved when care is taken to ensure that the entire substance and its vapor are at the prescribed temperature. This is often done, as with the use of an isoteniscope, by submerging the containment area in a liquid bath. The literature also provides extensive information with vapour pressure values for many volatile compounds. For example, the software of NIST (Lemmon, E.W. et al. NIST Standard Reference Database 23: Reference Fluid Thermodynamic and Transport Properties-REFPROP, Version 10.0, National Institute of Standards and Technology, Standard Reference Data Program, Gaithersburg, 2018) can be easily used to obtain the vapour pressure of any molecule, just pointing out the name of the molecule and the temperature (in the present case room temperature).

In the present invention the "vapor pressure value P" is calculated determining the vapor pressure value for each one of the components forming the gas mixture as well as of the own mixture under the temperature conditions at which the HPLC separation is performed. This can be performed using the software previously mentioned. In the context of the invention, the highest vapor pressure value among the values collected will correspond to the vapor pressure value of the gas mixture liquefied sample. Once it is stablished the highest value among the different components and the mixture, the pressure of the process or equipment can accordingly be adjusted. In one embodiment, the vapor pressure value P corresponds to one of the components forming part of the mixture. In another embodiment, the vapor pressure value P corresponds to the vapor pressure of the mixture. In another embodiment, the vapor pressure applied is higher than the vapor pressure value P. In another embodiment, the vapor pressure applied is higher than the vapor pressure value P which corresponds to the vapor pressure of one of the components of the mixture. In another embodiment, the vapor pressure applied is higher than the vapor pressure value P which corresponds to the vapor pressure of the gas mixture. In another embodiment, the process of the invention is performed at a pressure comprised from 4 to 20 bars, particularly from 10 to 20 bars.

In one embodiment, optionally in combination with any of the embodiments provided above or below, the process of the invention is performed at "room temperature". The term "room temperature", which can be interchangeably used with "ambient temperature" comprises the temperature of the air in the laboratory wherein the HPLC is located. In one embodiment, optionally in combination with any of the embodiments provided above or below, the temperature is comprised from 10 to 40°C or from 15 to 30°C.

In another embodiment, the process of the invention is performed at a pressure from 4 to 30 bars, or from 4 to 20 bars.

In another embodiment, optionally in combination with any of the embodiments provided above or below, the process is performed at 10 to 30 bars, and at a temperature from 10 to 60°C.

In another embodiment, optionally in combination with any of the embodiments provided above or below, the process is performed at 10 to 20 bars, and at a temperature from 10 to 40°C.

In another embodiment, the process of the invention is performed at a pressure from 13 to 18 bars, at a temperature from 20 to 35°C.

The particular pressure conditions pointed out in step (a) encompass both the embodiment wherein the pressure is maintained also in the step of collecting the component, but also the embodiment wherein the pressure, once complete the separation, is reduced to make the component of interest become a gas prior to its collection.

The term "stationary phase" as used herein, refers to the stationary phase used in chromatography for which the mobile phase components exhibit a selective affinity. Because such affinity can take a variety of forms other than adsorption (including size exclusion or complexation), the term refers to stationary phases that adsorb the components of a fluid mixture and to stationary phases that do not technically adsorb components from the mobile phase, but which nevertheless behave as an adsorbent by slowing the migration velocity of one component relative to another in a chromatographic system. Non-limiting examples of adsorbents, i.e. chromatographic stationary phase materials, are e.g.: Substituted silica, such as C-4 silica, C-6 silica, C-8 silica, C-10 silica, C-12 silica, C-18 silica and phenyl-based silica, as well as polymeric materials such as polystyrene, linear or branched alkyl chains with up to 20 carbon atoms (C20) - silica gel or phenyl- or benzene-substituted silica gel. Additional examples of chromatographic stationary phases are membranes, monolithic materials and filters. In one embodiment, the stationary phase is a non-substituted C-18 silica.

When used herein the term "mobile phase" have the same meaning as "eluent" and means the solvent which is introduced to the column to elute the component(s) of the mixture. In one embodiment, the mobile phase is an aqueous mobile phase. The term "aqueous mobile phase", as used herein, refers to a liquid that is mainly aqueous (i.e., non-organic) in character. In the context of the present invention, an aqueous mobile phase may comprise a certain amount of organic solvent, as well as other additives and modifiers. The amount of organic solvent may vary (for example, from 0 to 100%) during the chromatographic run. The term "organic solvent", as used herein, refers to any organic (i.e., non-aqueous) liquid that is suitable for use in reversed-phase chromatographic separations. In one embodiment, the organic solvent is polar (e.g., more polar than the reversed-phase stationary support material) and water soluble. In another embodiment, the eluent has an appropriate boiling point in such a way that when dragging the separated gases in the collecting vessel they are easily extractable by vacuum or temperature without carrying part of the eluent. In one embodiment, the eluent has a boiling temperature comprised from 70 to 150°C or from 80 to 110°C.

Solvents can be broadly classified into two categories: polar and non-polar. Generally, the dielectric constant of the solvent provides a rough measure of a solvent's polarity. In the context of the present invention, a polar solvent is one having a dielectric constant at room temperature equal or higher than 1.5. Illustrative non-limitative examples of polar solvents in the context of the invention are: DMF, THF, ethylene glycol, dimethyl ether, DMSO, acetone, acetonitrile, methanol, ethanol, 1-propanol, 2-propanol, 1-butanol, t-butanol, 2-methoxyethyl ether, and diglyme.

In one embodiment, the HPLC is RP-HLPC and the mobile phase has a polarity lower than water and higher than the polarity of the stationary phase of the HPLC column.

In one embodiment, the mobile phase is a mixture of water and a polar organic solvent selected from (C₆-C₁₂)alkyl, (C₁-C₁₀)alkyl substituted with one or more radicals selected from -OH, -CN, and -C(O)OR₁, wherein R₁ is (C₁-C₁₀)alkyl.

In another embodiment, the mobile phase is a mixture of water and a (C₁-C₁₀)alkyl substituted with one or more -OH, such as ethanol, 1-propanol, t-butanol, and glycols. In another embodiment the mobile phase is a mixture of water and (C₁-C₁₀)alkyl substituted (as defined above) with the following composition: water from 30 to 70% v/v and (C₁-C₁₀)alkyl substituted from 30 and 70%, provided that the sum of the percentages is 100%.In another embodiment, the mobile phase is a mixture of water and 1-propanol. In another embodiment, the mobile phase is a mixture of water and 1-propanol with the following composition: water from 40 to 60% v/v and 1-propanol from 40 and 60%, provided that the sum of the percentages is 100%. In another embodiment, the mobile phase is a mixture of water and 1-propanol at a % v/v of each one of the components of 50%.

In the present invention, "% v/v" have the same meaning as "% volume/volume" and means the volume of a component forming part of the mobile phase with respect to the total volume of the mixture forming the mobile phase multiplied per 100.

In one embodiment, the HPLC is RP-HLPC and the mobile phase is a mixture of water and a (C₁-C₁₀)alkyl substituted with one or more radicals selected from -OH, -CN, and - C(O)OR₁, wherein R₁ is (C₁-C₁₀)alkyl. In another embodiment, the HPLC is RP-HLPC and the mobile phase is a mixture of water and a (C₁-C₁₀)alkyl substituted with one or more - OH. In one embodiment, the HPLC is RP-HLPC and the mobile phase is a mixture of water and a (C₁-C₁₀)alkyl substituted with one or more radicals selected from -OH, -CN, and -C(O)OR₁, wherein R₁ is (C₁-C₁₀)alkyl, wherein the water is at a % v/v from 30 to 70% v/v and the (C₁-C₁₀)alkyl substituted (as defined above) is at a % v/v from 30 and 70%, provided that the sum of the percentages is 100%. In another embodiment, the HPLC is RP-HLPC and the mobile phase is a mixture of water and a (C₁-C₁₀)alkyl substituted with one or more -OH, wherein the water is at a % v/v from 30 to 70% v/v and the (C₁-C₁₀)alkyl substituted is at a % v/v from 30 and 70%, provided that the sum of the percentages is 100%. In another embodiment, the HPLC is RP-HLPC and the mobile phase is a mixture of water and 1-propanol. In another embodiment, the HPLC is RP-HLPC and the mobile phase is a mixture of water and 1-propanol, wherein the water is at a % v/v from 30 to 70% v/v and the (C₁-C₁₀)alkyl substituted is at a % v/v from 30 and 70%, provided that the sum of the percentages is 100%. In another embodiment, the HPLC is RP-HLPC and the mobile phase is a mixture of water and 1-propanol at a % v/v of each one of the components of 50%.

The mobile phase may be eluted through the chromatography column using an isocratic elution or a gradient.

The terms "gradient" and "gradient elution" are used herein interchangeably. They refer to an elution process that involves changes in the mobile phase composition during the chromatographic run. The mobile phase composition may be changed continuously or stepwise during the elution process. The composition may be varied to modify the character or properties (e.g., elution strength, polarity or pH) of the mobile phase. A gradient elution is generally used to decrease the time necessary to separate components of a mixture.

In an "isocratic elution", the composition of the mobile phase remains essentially constant for any part or all of the duration of the chromatographic separation process, however, the concentrations of the mobile phase components may vary. Thus, the term "isocratic" refers to an elution process in which the concentrations of the components of the mobile phase are maintained constant (i.e., within ±0.1%, preferably within ±0.05%) throughout the separation.

In one embodiment, the mobile phase composition is constant along the HPLC column, in "isocratic elution mode".

In one embodiment, the liquefied gas mixture sample is a liquefied refrigerant. In the present invention, a "refrigerant" is a substance or mixture, usually a fluid, used in a heat pump and refrigeration cycle. In most cycles it undergoes phase transitions from a liquid to a gas and back again. Many working fluids have been used for such purposes.

Refrigerants may be divided into three classes according to their manner of absorption or extraction of heat from the substances to be refrigerated: Class 1 (includes refrigerants that cool by phase change (typically boiling), using the refrigerant's latent heat), Class 2 (cool by temperature change or 'sensible heat', the quantity of heat being the specific heat capacity x the temperature change. They are air, calcium chloride brine, sodium chloride brine, alcohol, and similar nonfreezing solutions); and Class 3 (consists of solutions that contain absorbed vapors of liquefiable agents or refrigerating media).

The R-# numbering system was developed by DuPont (which owned the Freon trademark), and systematically identifies the molecular structure of refrigerants made with a single halogenated hydrocarbon. The R-400 series is made up of zeotropic blends (those where the boiling point of constituent compounds differs enough to lead to changes in relative concentration because of fractional distillation) and the R-500 series is made up of so-called azeotropic blends. The rightmost digit is assigned arbitrarily by ASHRAE, an industry standards organization. The R-700 series is made up of non-organic refrigerants, also designated by ASHRAE.

In another embodiment, the liquefied refrigerant is selected from a liquefied haloalkane refrigerant and a liquefied hydrocarbon refrigerant, particularly a liquefied haloalkane refrigerant. In another embodiment, the liquefied haloalkane refrigerant is a liquefied hydrofluorocarbon refrigerant.

In another embodiment, the liquefied hydrofluorocarbon refrigerant is a zeotropic or an azeotropic hydrofluorocarbon blend. Illustrative non-limitative examples of zeotropic hydrofluorocarbon blends are:
R-406A is a zeotropic blend of 55 wt.% R-22, 4 wt.% R-600a, and 41 wt.% R-142b;
R-407A is a zeotropic blend of 20 wt.% R-32, 40 wt.% R-125, and 40 wt.% R-134a;
R-407C is a zeotropic blend of R-32, R-125, and R-134a;
R-408A is a zeotropic blend of R-22, R-125, and R-143a;
R-409A is a zeotropic blend of R-22, R-124, and R-142b;
R-422A is a zeotropic blend of R-125/R134a/R-600a at 85.1wt.%/11.5 wt.%/3.4 wt.%;
R-422D is a zeotropic blend of R-125/R134a/R-600a at 65 wt.%/31.5 wt.%/3.5 wt.%;
R-437A is a zeotropic blend of R-125/R-134a/R-600/R-601a at 19.5 wt.%/78.5 wt.%/1.4 wt.%/0.6 wt.%;
R-428A is a zeotropic blend of R-125/R-143a/R-600a/R-290 at 77.5 wt.%/20 wt.%/1.9 wt.%/0.6 wt.%;
R-434A is a zeotropic blend of R-125/R-143a/R-134a/R-600a at 63.2 wt.%/18 wt.%/16 wt.%/2.8 wt.%);
R-442A is a zeotropic blend of R-125/R-32/R-134a/R-227ea/R-152a at 30 wt.%/30 wt.%/31 wt.%/5 wt.%/3 wt.%;
R-500 is an azeotropic blend of 73.8 wt.% R-12 and 26.2 wt.% of R-152a;
R-502 is an azeotropic blend of R-22 and R-115; and
R-507A is an azeotropic blend of R-143a and R-125;
the percentage by weight (wt%) being expressed with respect to the total weight of the blend;
and wherein:
   R-12: dichlorodifluoromethane;
   R-22: chlorodifluoromethane.
   R-32: difluoromethane.
   R-142b: 1-chloro-1,1-difluoroethane;
   R-115: chloropentafluoroethane.
   R-134a: 1,1,1,2-tetrafluoroethane;
   R-125: pentafluoroethane;
   R-143a: 1,1,1-trifluoroethane;
   R-152a: 1,1-difluoroethane;
   R-227ea: 1,1,1,2,3,3,3-heptafluoropropane;
   R-290: propane;
   R-600: butane;
   R-600a: isobutane; and
   R-601a: isopentane;

In another embodiment the liquefied refrigerant is R-507A. In another embodiment, the liquefied refrigerant is R-507A having a vapor pressure value of 12.8 bars at 25°C.

In another embodiment, the process further comprises a step (i) comprising the identification of the component of interest, previously to perform step (b).

The identification can be performed using selective or universal detectors. Universal detectors typically measure a bulk property (e.g., refractive index) by measuring a difference of a physical property between the mobile phase and mobile phase with solute while selective detectors measure a solute property (e.g., UV-Vis absorbance) by simply responding to the physical or chemical property of the solute. HPLC most commonly uses a UV-Vis absorbance detector, however, a wide range of other chromatography detectors can be used. A universal detector that complements UV-Vis absorbance detection is the Charged aerosol detector (CAD) or a UV-Vis DAD (Diode Array Detector). A kind of commonly utilized detector includes refractive index detectors, which provide readings by measuring the changes in the refractive index of the eluant as it moves through the flow cell. In certain cases, it is possible to use multiple detectors, for example LCMS normally combines UV-Vis with a mass spectrometer. In a HPLC system, a detector is generally placed downstream from the analytical column, and is used to continuously monitor whole or part of the eluant exiting the column.

In another embodiment, the process is performed in a HPLC equipment comprising a preparative HPLC column and a back-pressure valve which is connected downstream the HPLC column.

The HPLC equipment can be any of those currently marketed including a preparative HPLC column. There are commercially back-pressure valves suitable to be used. No special technical requirements must be complied by this valve, just to be located downstream the HPLC column to create the constant pressure during the whole process. The skilled person, making use of the general knowledge, can easily incorporate the back-pressure valve in the commercial preparative HPLC equipment.

In another embodiment, the liquefied gas mixture sample is loaded onto the HPLC column through an autosampler, such as an injection valve having a sample loop. In the load position the sample loop is filled with sample while the system is equilibrating. When turning to the inject position, the sample loop is switched to the high pressure part of the HPLC equipment. The flow delivered by the pump flows through the loop and feeds the sample onto the column. Manual injection valves are the most cost-effective option to introduce samples. Normally, valves with 6 ports and 2 positions - for loading and injection - are used.

In another embodiment, the process of the invention is performed with the HPLC equipment provided by the present invention.

In an embodiment, the process comprises the recovery of the eluent to re-use it again.

The term "recover", when referred to the mobile phase, also includes its treatment to be reusable. It is something common that the mobile phase, during the separation step, retains all or part of component(s) forming part of the sample.

The recovery of the gas can be performed by reducing the pressure below the vapor pressure of the component and/or increasing the temperature of the eluant at a temperature between the room temperature and the boiling temperature. In one embodiment, the recovery is performed by combining low pressure and high temperature. Advantageously, the eluant could be purified enough to be recycled into the chromatographic system.

Thus, the recovery of the mobile phase comprises subjecting the mobile phase (after the completion of the separation in the HPLC column) to a pressure equal or lower than the vapor pressure of the component(s) originally forming part of the mixture to be separated. In this way, the volatile compound(s), retained in the mobile phase, will gasify, and the mobile phase will be cleaned. In one embodiment, this reduction in the pressure is performed by a regulating the pressure of the back-valve. Alternatively, or in combination to the reduction in the pressure, the recovery of the mobile phase can also include to increase the temperature to convert the volatile compound(s) in gas. The resulting gas can be collected and destroyed, whereas the resulting cleaned mobile phase can be use again in another separation process of the invention.

When a component or fraction is said to be "separated" from other components or fractions, it will be understood that the component or fraction is "purified".

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim. Furthermore, the present invention covers all possible combinations of particular and preferred embodiments described herein.

### Example

### Separation process

Using the HPLC equipment as provided in Fig.1 the separation of R-125 from a commercial azeotropic refrigerant mixture, R-507A, was performed

Preparative column: Agilent Prep-C18; 30 x 150mm 10µ. The stationary phase is C-18 silica with no functionalization.

The mobile phase was prepared by mixing 1-propanol (PanReac Ref. 361885.1612) with water (PanReac Ref. 361074.1612) at 50% (v/v). Eluent flow used was of 3 mL/min with an injection loop of 1 mL.

R-125, R-143a and R-507A, obtained from GRIT.

The UV-VIS detector (Agilent 1260) wavelength was set to 270 nm (for detecting C-F bond of the molecules forming part of the blend).

The system was switched and the back-pressure of valve V3 was manually adjusted to 15 bar (1.5 MPa).

The lamp, flow and pump were switched and the system were left some time until the pressure and the detector signal were constant. Then, the injection loop was filled with the sample to be separated, R-507A, opening the V1 and V2 until liquid flowed out through V2.

When the loop was filled, the separation experiment started, switching the injection valve 9, the sample flowed into the column dragged by the eluent, producing its separation. The peaks were recorded using the detector at the outlet of the column and finally the eluant flows through the V3 reducing its pressure and producing the gasification of the sample.

The separated component, now gasified, was collected in vessel 7. The retention time for each one of the components were determined.

The eluant was collected in vessel 8.

### Results and discussions

### 1. Pure components retention time determination.

The specific retention times of each component was firstly determined under the previous experimental conditions charging the loop using R-125 or R-143a samples having a purity degree of 99.5 wt% (GRIT). The peak was identified simultaneously by an absorbance variation in the detector followed by the existence of bubbles (also indicative of the recovery of the fractions) after the valve V3. This determination was done for R-125 and R-143a. Under these conditions the retention time was significantly different. The R-125 peak was obtained after 33min and the R-143a one after 42min.

### 2. R-507A separation process.

Applying the same conditions but charging the loop with R-507A, two peaks were obtained, the first at 34min corresponding to R-125 and the second to 41min corresponding to R-143a.

### 3. Conclusions

The components of the mixture were separated allowing the obtention of R-125 with the desired purity. By the other hand, the R-143a with the minor traces of the R-125 remaining can be destroyed. Globally, a high quality raw material is obtained from a former waste refrigerant. The more sustainable components can be separated from the ones with higher GWP values.

## Claims

1. A process for separating a component of interest from a gas mixture liquefied sample, the process comprising the steps of (a) subjecting the sample to a preparative reverse-phase high performance liquid chromatography (RP-HPLC); and (b) collecting at least a portion of the component of interest; wherein:
(i) the process is performed at a temperature from 10 to 60°C; and
(ii) the gas mixture liquefied sample applied on the HPLC column as well as the components eluting through the HPLC are maintained in liquid form, by applying a pressure equal to or higher than a vapor pressure value P at least during the step (a);
wherein the vapor pressure value "P" is determined by determining the vapor pressure of each one of the components forming the sample as well as of the gas mixture liquefied sample under the same temperature at which the separation step is performed, and selecting the highest value among these vapor pressure values.

2. The process of claim 1, wherein the gas mixture liquefied sample is a refrigerant.

3. The process of claim 2, wherein the refrigerant is selected from a haloalkane refrigerant and a hydrocarbon refrigerant.

4. The process of claim 3, wherein the refrigerant is a haloalkane refrigerant, such as a hydrofluorocarbon (HCF) refrigerant.

5. The process of claim 4, wherein the refrigerant is a hydrofluorocarbon blend, particularly, a hydrofluorocarbon blend selected from R-406A, R-407A, R-407C, R-408A, R-409A, R-422A, R-422D, R-437A, R-428A, R-434A, R-442A, R-500, R-502 and R-507A; wherein:
R-406A is a zeotropic blend of 55 wt.% R-22, 4 wt.% R-600a, and 41 wt.% R-142b;
R-407A is a zeotropic blend of 20 wt.% R-32, 40 wt.% R-125, and 40 wt.% R-134a;
R-407C is a zeotropic blend of R-32, R-125, and R-134a;
R-408A is a zeotropic blend of R-22, R-125, and R-143a;
R-409A is a zeotropic blend of R-22, R-124, and R-142b;
R-422A is a zeotropic blend of R-125/R134a/R-600a at 85.1wt.%/11.5 wt.%/3.4 wt.%;
R-422D is a zeotropic blend of R-125/R134a/R-600a at 65 wt.%/31.5 wt.%/3.5 wt.%;
R-437A is a zeotropic blend of R-125/R-134a/R-600/R-601a at 19.5 wt.%/78.5 wt.%/1.4 wt.%/0.6 wt.%;
R-428A is a zeotropic blend of R-125/R-143a/R-600a/R-290 at 77.5 wt.%/20 wt.%/1.9 wt.%/0.6 wt.%;
R-434A is a zeotropic blend of R-125/R-143a/R-134a/R-600a at 63.2 wt.%/18 wt.%/16 wt.%/2.8 wt.%);
R-442A is a zeotropic blend of R-125/R-32/R-134a/R-227ea/R-152a at 30 wt.%/30 wt.%/31 wt.%/5 wt.%/3 wt.%;
R-500 is an azeotropic blend of 73.8 wt.% R-12 and 26.2 wt.% of R-152a;
R-502 is an azeotropic blend of R-22 and R-115; and
R-507A is an azeotropic blend of R-143a and R-125;
the percentage by weight (wt%) being expressed with respect to the total weight of the blend;
and wherein:
R-12: dichlorodifluoromethane;
R-22: chlorodifluoromethane.
R-32: difluoromethane.
R-142b: 1-chloro-1,1-difluoroethane;
R-115: chloropentafluoroethane.
R-134a: 1,1,1,2-tetrafluoroethane;
R-125: pentafluoroethane;
R-143a: 1,1,1-trifluoroethane;
R-152a: 1,1-difluoroethane;
R-227ea: 1,1,1,2,3,3,3-heptafluoropropane;
R-290: propane;
R-600: butane;
R-600a: isobutane; and
R-601a: isopentane.

6. The process of any one of the claims 1-5, wherein the gas mixture liquefied sample is prepared, previously to perform step (a) of the process, by cooling or compression under pressure a gas mixture sample.

7. The process of any one of the preceding claims 1-6, wherein the mobile phase has a polarity lower than water and higher than the polarity of the stationary phase of the HPLC column.

8. The process of claim 7, wherein the mobile phase is a mixture comprising water and a second polar solvent which is miscible in water selected from (C₆-C₁₂)alkyl, and (C₁-C₁₀)alkyl substituted with one or more radicals selected from -OH, -CN, and -C(O)OR₁, wherein R₁ is (C₁-C₁₀)alkyl.

9. The process of claim 8, wherein the mobile phase is a mixture comprising water and 1-propanol.

10. The process of any one of the preceding claims 1-9, wherein the mobile phase composition is constant along the HPLC preparative column.

11. The process of any one of the preceding claims 1-10, wherein steps (a) and (b) are performed in a HPLC equipment comprising a preparative RP-HPLC column, a back-pressure valve which is connected downstream the HPLC column, and a pressure indicator located between the HPLC column and the back-pressure valve.

12. The process of any one of the preceding claims 1-11, which further comprises an intermediate step (i) comprising the identification of the component of interest, separated in step (a), previously to perform step (b).

13. The process of any one of the preceding claims 1-12, which further comprises a step (c) wherein the mobile phase is recovered.

14. The process of any one of the preceding claims 1-13, which is performed with an HPLC equipment comprising a preparative reverse-phase HPLC column (1), a back-pressure valve (V3) which is connected downstream the HPLC column (1), and a pressure indicator (5) between the HPLC column (1) and the back-pressure valve (V3)..

## Patentansprüche

1. Ein Verfahren zum Abtrennen einer Komponente von Interesse aus einer verflüssigten Gasgemischprobe, wobei das Verfahren die folgenden Schritte umfasst: (a) Unterziehen der Probe einer präparativen Umkehrphasen-Hochleistungsflüssigkeitschromatographie (RP-HPLC); und (b) Sammeln von mindestens einem Teil der Komponente von Interesse; wobei:
(i) das Verfahren bei einer Temperatur von 10 bis 60 °C durchgeführt wird; und
(ii) die auf die HPLC-Säule aufgebrachte verflüssigte Gasgemischprobe sowie die durch die HPLC eluierenden Komponenten in flüssiger Form gehalten werden, indem zumindest während des Schritts (a) ein Druck angelegt wird, der gleich oder höher als ein Dampfdruckwert P ist;
wobei der Dampfdruckwert "P" durch Bestimmen des Dampfdrucks jeder der Komponenten, die die Probe bilden, sowie der verflüssigten Gasgemischprobe unter der gleichen Temperatur, bei der der Trennschritt durchgeführt wird, und Auswählen des höchsten Werts aus diesen Dampfdruckwerten bestimmt wird.

2. Das Verfahren von Anspruch 1, wobei die verflüssigte Gasgemischprobe ein Kältemittel ist.

3. Das Verfahren von Anspruch 2, wobei das Kältemittel aus einem Halogenalkankältemittel und einem Kohlenwasserstoffkältemittel ausgewählt ist.

4. Das Verfahren von Anspruch 3, wobei das Kältemittel ein Halogenalkankältemittel ist, wie etwa ein Fluorkohlenwasserstoff (HCF)-Kältemittel.

5. Das Verfahren von Anspruch 4, wobei das Kältemittel eine Fluorkohlenwasserstoffmischung ist, insbesondere eine Fluorkohlenwasserstoffmischung ausgewählt aus R-406A, R-407A, R-407C, R-408A, R-409A, R-422A, R-422D, R-437A, R-428A, R-434A, R-442A, R-500, R-502 und R-507A; wobei:
R-406A eine zeotrope Mischung aus 55 Gew.% R-22, 4 Gew.- % R-600a und 41 Gew.- % R-142b ist;
R-407A eine zeotrope Mischung aus 20 Gew.% R-32, 40 Gew.- % R-125 und 40 Gew.- % R-134a ist;
R-407C eine zeotrope Mischung aus R-32, R-125 und R-134a ist;
R-408A eine zeotrope Mischung aus R-22, R-125 und R-143a ist;
R-409A eine zeotrope Mischung aus R-22, R-124 und R-142b ist;
R-422A eine zeotrope Mischung aus R-125/R 134a/R-600a bei 85,1 Gew.- %/11,5 Gew.-%/3,4 Gew.- % ist;
R-422D eine zeotrope Mischung aus R-125/R 134a/R-600a bei 65 Gew.- %/31,5 Gew.-%/3,5 Gew.- % ist;
R-437A eine zeotrope Mischung aus R-125/R-134a/R-600/R-601a bei 19,5 Gew.- %/78,5 Gew.- %/1,4 Gew.- %/0,6 Gew.- % ist;
R-428A eine zeotrope Mischung aus R-125/R-143a/R-600a/R-290 bei 77,5 Gew.- %/20 Gew.- %/1,9 Gew.- %/0,6 Gew.- % ist;
R-434A eine zeotrope Mischung aus R-125/R-143a/R-134a/R-600a bei 63,2 Gew.- %/18 Gew.- %/16 Gew.- %/2,8 Gew.- %) ist;
R-442A eine zeotrope Mischung aus R-125/R-32/R-134a/R-227ea/R-152a bei 30 Gew.-%/30 Gew.- %/31 Gew.- %/5 Gew.- %/3 Gew.- % ist;
R-500 eine azeotrope Mischung aus 73,8 Gew.% R-12 und 26,2 Gew.- % R-152a ist;
R-502 eine azeotrope Mischung aus R-22 und R-115 ist; und
R-507A eine azeotrope Mischung aus R-143a und R-125 ist;
wobei der Gewichtsprozentsatz (Gew.-%) in Bezug auf das Gesamtgewicht der Mischung ausgedrückt wird;
und wobei:
R-12: Dichlordifluormethan;
R-22: Chlordifluormethan;
R-32: Difluormethan;
R-142b: 1-Chlor-1,1-difluorethan;
R-115: Chlorpentafluorethan;
R-134a: 1,1,1,2-Tetrafluorethan;
R-125: Pentafluorethan;
R-143a: 1,1,1-Trifluorethan;
R-152a: 1,1-Difluorethan;
R-227ea: 1,1,1,2,3,3,3-Heptafluorpropan;
R-290: Propan;
R-600: Butan;
R-600a: Isobutan; und
R-601a: Isopentan.

6. Das Verfahren von einem der Ansprüche 1 bis 5, wobei die verflüssigte Gasgemischprobe vor dem Durchführen von Schritt (a) des Verfahrens durch Kühlen oder Komprimieren einer Probe des Gasgemisches unter Druck hergestellt wird.

7. Das Verfahren von einem der vorhergehenden Ansprüche 1 bis 6, wobei die mobile Phase eine Polarität aufweist, die niedriger als Wasser und höher als die Polarität der stationären Phase der HPLC-Säule ist.

8. Das Verfahren von Anspruch 7, wobei die mobile Phase eine Mischung ist, die Wasser und ein zweites polares Lösungsmittel umfasst, welches mit Wasser mischbar ist, ausgewählt aus (C₆-C₁₂)-Alkyl und (C₁-C₁₀)-Alkyl, das mit einem oder mehreren Resten substituiert ist, die ausgewählt aus -OH, -CN und -C(O)OR₁ sind, wobei R₁ (C₁-C₁₀)-Alkyl ist.

9. Das Verfahren von Anspruch 8, wobei die mobile Phase eine Mischung ist, die Wasser und 1-Propanol umfasst.

10. Das Verfahren von einem der vorhergehenden Ansprüche 1 bis 9, wobei die Zusammensetzung der mobilen Phase entlang der präparativen HPLC-Säule konstant ist.

11. Das Verfahren von einem der vorhergehenden Ansprüche 1 bis 10, wobei die Schritte (a) und (b) in einer HPLC-Anlage durchgeführt werden, die eine präparative RP-HPLC-Säule, ein Rückschlagventil, welches stromabwärts der HPLC-Säule angeschlossen ist, und einen Druckindikator, der sich zwischen der HPLC-Säule und dem Rückschlagventil befindet, umfasst.

12. Das Verfahren von einem der vorhergehenden Ansprüche 1 bis 11, welches ferner einen Zwischenschritt (i) umfasst, der die Identifizierung der Komponente von Interesse umfasst, die in Schritt (a) getrennt wurde, bevor Schritt (b) durchgeführt wird.

13. Das Verfahren von einem der vorhergehenden Ansprüche 1 bis 12, welches ferner einen Schritt (c) umfasst, bei dem die mobile Phase gewonnen wird.

14. Das Verfahren von einem der vorhergehenden Ansprüche 1 bis 13, welches mit einer HPLC-Anlage durchgeführt wird, die eine präparative Umkehrphasen-HPLC-Säule (1), ein Rückschlagventil (V3), welches stromabwärts der HPLC-Säule (1) angeschlossen ist, und einen Druckindikator (5) zwischen der HPLC-Säule (1) und dem Rückschlagventil (V3) umfasst.

## Revendications

1. Un procédé pour séparer un composant d'intérêt d'un échantillon liquéfié de mélange de gaz, le procédé comprenant les étapes consistant à (a) soumettre l'échantillon à une chromatographie en phase liquide à haute performance en phase inverse préparative (RP-HLPC) ; et (b) recueillir au moins une partie du composant d'intérêt ; dans lequel :
(i) le procédé est effectué à une température de 10 à 60 °C ; et
(ii) l'échantillon liquéfié du mélange de gaz appliqué sur la colonne HLPC ainsi que les composants éluant à travers la HLPC sont maintenus sous forme liquide, en appliquant une pression égale ou supérieure à une valeur de pression de vapeur P au moins pendant l'étape (a) ;
dans lequel la valeur de pression de vapeur « P » est déterminée en déterminant la pression de vapeur de chacun des composants formant l'échantillon ainsi que de l'échantillon liquéfié du mélange de gaz à la même température à laquelle l'étape de séparation est effectuée, et en sélectionnant la valeur la plus élevée parmi ces valeurs de pression de vapeur.

2. Le procédé de la revendication 1, dans lequel l'échantillon liquéfié du mélange de gaz est un réfrigérant.

3. Le procédé de la revendication 2, dans lequel le réfrigérant est choisi parmi un réfrigérant haloalcane et un réfrigérant hydrocarboné.

4. Le procédé de la revendication 3, dans lequel le réfrigérant est un réfrigérant haloalcane, tel qu'un réfrigérant hydrofluorocarboné (HCF).

5. Le procédé de la revendication 4, dans lequel le réfrigérant est un mélange d'hydrofluorocarbures, en particulier, un mélange d'hydrofluorocarbures choisi parmi R-406A, R-407A, R-407C, R-408A, R-409A, R-422A, R-422D, R-437A, R-428A, R-434A, R-442A, R-500, R-502 et R-507A ; dans lequel :
R-406A est un mélange zéotropique de 55 % en poids R-22, 4 % en poids R-600a et 41 % en poids R-142b ;
R-407A est un mélange zéotropique de 20 % en poids R-32, 40 % en poids R-125 et 40 % en poids R-134a ;
R-407C est un mélange zéotropique de R-32, R-125 et R-134a ;
R-408A est un mélange zéotropique de R-22, R-125 et R-143a ;
R-409A est un mélange zéotropique de R-22, R-124 et R-142b ;
R-422A est un mélange zéotropique de R-125/R134a/R-600a à 85,1 % en poids/11,5 % en poids/3,4 % en poids ;
R-422D est un mélange zéotropique de R-125/R134a/R-600a à 65 % en poids/31,5 % en poids/3,5 % en poids ;
R-437A est un mélange zéotropique de R-125/R-134a/R-600/R-601a à 19,5 % en poids/78,5 % en poids/1,4 % en poids/0,6 % en poids ;
R-428A est un mélange zéotropique de R-125/R-143a/R-600a/R-290 à 77,5 % en poids/20 % en poids/1,9 % en poids/0,6 % en poids ;
R-434A est un mélange zéotropique de R-125/R-143a/R-134a/R-600a à 63,2 % en poids/18 % en poids/16 % en poids/2,8 % en poids) ;
R-442A est un mélange zéotropique de R-125/R-32/R-134a/R-227ea/R-152a à 30 % en poids/30 % en poids/31 % en poids/5 % en poids/3 % en poids ;
R-500 est un mélange azéotropique de 73,8 % en poids R-12 et 26,2 % en poids R-152a ; R-502 est un mélange azéotropique de R-22 et R-115 ; et
R-507A est un mélange azéotropique de R-143a et R-125 ;
le pourcentage en poids (% en poids) étant exprimé par rapport au poids total du mélange ;
et dans lequel :
R-12 : dichlorodifluorométhane ;
R-22 : chlorodifluorométhane ;
R-32 : difluorométhane ;
R-142b : 1-chloro-1,1-difluoroéthane ;
R-115 : chloropentafluoroéthane ;
R-134a : 1,1,1,2-tétrafluoroéthane ;
R-125 : pentafluoroéthane ;
R-143a : 1,1,1-trifluoroéthane ;
R-152a : 1,1-difluoroéthane ;
R-227ea : 1,1,1,2,3,3,3-heptafluoropropane ;
R-290 : propane ;
R-600 : butane ;
R-600a : isobutane ; et
R-601a : isopentane.

6. Le procédé de l'une quelconque des revendications 1 à 5, dans lequel l'échantillon liquéfié de mélange de gaz est préparé, préalablement à la réalisation de l'étape (a) du procédé, par refroidissement ou compression sous pression d'un échantillon de mélange de gaz.

7. Le procédé de l'une quelconque des revendications précédentes 1 à 6, dans lequel la phase mobile a une polarité inférieure à l'eau et supérieure à la polarité de la phase stationnaire de la colonne HLPC.

8. Le procédé selon la revendication 7, dans lequel la phase mobile est un mélange comprenant de l'eau et un second solvant polaire qui est miscible dans l'eau choisi parmi alkyle en (C₆-C₁₂) et alkyle en (C₁-C₁₀) substitué par un ou plusieurs radicaux choisis parmi -OH, -CN et -C(O)OR₁, dans lequel R₁ est alkyle en (C₁-C₁₀).

9. Le procédé de la revendication 8, dans lequel la phase mobile est un mélange comprenant de l'eau et du 1-propanol.

10. Le procédé de l'une quelconque des revendications précédentes 1 à 9, dans lequel la composition de la phase mobile est constante le long de la colonne HLPC préparative.

11. Le procédé de l'une quelconque des revendications précédentes 1 à 10, dans lequel les étapes (a) et (b) sont effectuées dans un équipement HLPC comprenant une colonne RP-HLPC préparative, une soupape de retenue qui est connectée en aval de la colonne HLPC, et un indicateur de pression situé entre la colonne HLPC et la soupape de retenue.

12. Le procédé de l'une quelconque des revendications précédentes 1 à 11, qui comprend en outre une étape intermédiaire (i) comprenant l'identification du composant d'intérêt, séparé à l'étape (a), précédemment pour effectuer l'étape (b).

13. Le procédé de l'une quelconque des revendications précédentes 1 à 12, qui comprend en outre une étape (c) dans laquelle la phase mobile est récupérée.

14. Le procédé de l'une quelconque des revendications précédentes 1 à 13, qui est effectué avec un équipement HLPC comprenant une colonne HLPC en phase inverse préparative (1), une soupape de retenue (V3) qui est connectée en aval de la colonne HLPC (1), et un indicateur de pression (5) entre la colonne HLPC (1) et la soupape de retenue (V3).
